# EUROPEAN PATENT APPLICATION

(11) **EP 0 530 824 A1**
(43) Date of publication of application: **10.03.1993**
(21) Application number: 92115164.3
(22) Date of filing: 04.09.1992
(51) Int. Cl.: B05B 9/08, B05B 7/24, A01M 7/00, A01M 9/00

(54) **Improvements in or relating to the dispensing of agricultural chemicals**

(30) Priority: 06.09.1991 GB 9119076
(71) Applicant: HORSTINE FARMERY LIMITED, York YO4 3SP (GB)
(72) Inventor: Bailey, Patrick Warren, Beverley, North Humberside HU17 7RJ (GB)
(74) Representative: Oulton, Richard John

(57) **Abstract**

Manual apparatus for dispensing liquid agricultural chemicals comprises a backpack (30) supporting a reservoir (31) for liquid chemical, a fan (33) for generating air streams, and liquid spray generating means (35a) which comprises nozzles (36) for injecting liquid chemical to be dispensed into the air streams, the spray generating means being mounted such that the liquid spray pattern generated by it is always behind the operator. The apparatus can include a plurality of nozzles arranged around an arcuate path to lie in a common plane substantially at right angles to the intended direction of travel of the operator, and arranged to discharge liquid chemical rearwardly of the said common plane.

## Description

This invention relates to the dispensing of agricultural chemicals and, more particularly, to the dispensing of liquid agricultural chemicals.

There are three basic methods for dispensing liquid agricultural chemicals;
(a) wherein the liquid agricultural chemical is dispensed through a spray boom towed by, or mounted on, a vehicle,
(b) wherein the liquid is dispensed manually from a small reservoir carried in the hands of the operator and,
(c) wherein the liquid reservoir is mounted on, or in, a back-pack carried by the operator
The present invention is concerned only with manual back-pack dispensing apparatus and all vehicle-mounted dispensing apparatus and hand-held reservoir apparatus is disclaimed herefrom.

Most conventional manual back-pack apparatus for dispensing liquid agricultural chemicals comprises a back-pack, supporting the reservoir for the liquid to be dispensed, a dispensing apparatus for dispensing the liquid in droplet form, and means for supplying the liquid chemical from the reservoir to the dispensing apparatus.

The means for supplying the liquid chemical to the dispensing apparatus may comprise a simple duct arrangement affording a gravity discharge from the reservoir to the dispensing apparatus, or the liquid reservoir may be pressurised to pressurise the liquid at discharge through the dispensing apparatus, or a pump, mounted on the back-pack, is effective between the reservoir and the dispensing apparatus to deliver the liquid under pressure to the dispensing apparatus.

In one popular form the dispensing apparatus comprises a spray generating arrangement, generally a spray nozzle, mounted on one end of a hand supported elongate element, and which element comprises, or supports, part of the means for supplying liquid to the spray generating arrangement. That part of the means for supplying liquid to the spray generating arrangement upstream of the said hand supported element is flexible to allow the said hand supported element to be readily displaceable relative to the reservoir.

In practice, the operator will advance in a given direction through the target area to be sprayed, holding the element such that the spray generating means is forward of the operator, and by manually sweeping the hand supported element from side to side, the operator will direct the spray issuing from the dispensing nozzle to cover the desired target area.

For applications, such as field applications, whereby the operator is spraying the liquid chemical in his path, said operator is advancing through sprayed crop and at least the lower part of the operator's clothing become soaked with the liquid agricultural chemical.

Many of the liquid agricultural chemicals dispensed by hand-held dispensing apparatus are hazardous, particularly if inhaled, and whilst an operator intending to engage in such spraying may dress in protective clothing, and which may include a face-mask, such protective clothing is expensive and cumbersome and uncomfortable to wear, particularly in hot climates.

The present invention seeks to provide a manual arrangement for dispensing liquid agricultural chemicals, including a hand-held liquid spray generating apparatus, and which affords the operator a degree of protection from the sprayed chemical

According to the present invention there is provided a manual dispensing apparatus for dispensing liquid agricultural chemicals, comprising a backpack supporting a reservoir for liquid chemical, a hand supported spray generating means, and means for supplying liquid chemical from the reservoir to the spray generating means, characterised in that the hand supported spray generating means is arranged to spray the liquid chemical rearwardly of the operator.

Preferably the spray generating means is mounted on a tail boom extending rearwardly with respect to the intended direction of travel of the operator.

Preferably the apparatus includes a plurality of spray generating means spaced apart around an arcuate path to lie in a common plane substantially at right angles to the intended direction of travel of the operator, and arranged to discharge liquid chemical rearwardly of the said common plane.

Accordingly to another aspect of the invention a manual dispensing apparatus for dispensing liquid agricultural chemicals, comprises a backpack supporting a reservoir for liquid chemical, means for generating air streams, and liquid spray generating means which comprises means for injecting liquid chemical to be dispensed into the air streams, characterised in that the spray generating means is arranged to spray liquid chemical rearwardly of the operator.

Preferably the apparatus includes a plurality of spray generating means spaced apart around an arcuate path to lie in a common plane substantially at right angles to the intended direction of travel of the operator, and arranged to discharge liquid chemical rearwardly of the said common plane.

In a preferred embodiment the apparatus includes a flexible duct extending from the air flow generating means, having its free end supported remote from the backpack where the spray is generated, and means for injecting liquid chemical into the air streams at or adjacent to the free end of the duct.

Preferably with such an embodiment the air duct includes an arcuate section fixed relative to the backpack, and which surround the liquid chemical injection means.

In one preferred embodiment the air duct includes an air manifold with a plurality of outlets spaced around its arcuate section, with a liquid chemical injection means located adjacent each outlet.

Preferably the apparatus includes a pump for supplying liquid chemical under pressure for injection into the air streams.

In a preferred embodiment the apparatus includes a tail boom which extends rearwardly with respect to the intended direction of travel of the operator, which supports the free end of the duct and from which the spray is generated.

Preferably with such an embodiment the spray generating means is mounted such that the liquid spray pattern generated by it is always behind the operator.

Preferably the apparatus includes a hand supported lever linked to the tail boom, which extends forward of the operator and is displaceable by the operator in at least one plane to displace the spray generating means in at least one plane relative to the backpack.

Preferably the lever is a continuation of the tail boom and the tail boom and lever are pivotally connected to the backpack for displacement about one pivotal axis.

Preferably the lever is a continuation of the tail boom and the tail boom and lever are connected to the backpack by a universal joint.

The invention will now be described further by way of example with reference to the accompanying drawings in which,
- Fig. 1: shows a perspective view of a dispensing apparatus in accordance with the invention,
- Fig. 2: shows, diagrammatically, a perspective view of a second embodiment in accordance with the invention and,
- Fig. 3: shows a rear view of a fixed air manifold for a dispensing apparatus in accordance with the invention.

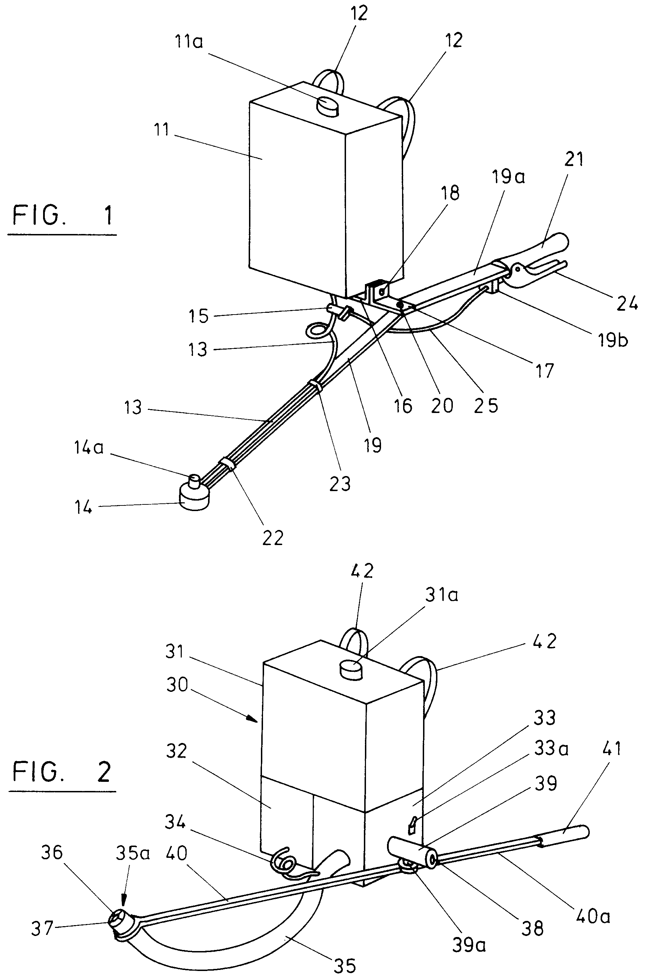

In the embodiment illustrated in Fig. 1, a reservoir 11, for the liquid chemical to be dispensed, has shoulder straps 12 by which the reservoir 11 can be carried on the back of the operator. The reservoir 11 discharges under gravity via a flexible duct 13 to a battery-operated spinning disc spraying device 14. The spraying device 14 is well known in the art and no further description thereof is necessary herein.

The flexible duct 13 includes an on/off valve 15 for opening or closing the supply of liquid chemical to the duct 13.

A bracket 16, fixed to the underside of the reservoir 11, extents from one side of the reservoir 11 and an element 17 is pivotally connected to the bracket 16 by a substantially horizontal pivot pin 18. A tail boom 19 is pivotally connected to the element 17 so as to be rotatable about a substantially vertical pivot pin 20. The tail boom 19, has a part 19a integrally formed therewith and the part 19a extending forwardly, with respect to the operator, and includes a handle part 21, on its end remote from the pivot 20. Rearwardly of the pivot 20 the tail boom 19 extends rearwardly and downwardly to support the spinning disc device 14 on its end remote from pivot 20. The end regions of the duct 13 remote from the reservoir 11 are attached to the tail boom 19, as by securing bands 22 and 23.

The handle part 21 includes cable hand lever 24, which cooperates with a fixed part 19b of the lever 19a, to afford control of the on-off valve 15 via a flexible sheathed cable 25.

In operating the device illustrated in Fig. 1 the reservoir 11 is charged with agricultural liquid chemical via the conventional filler arrangement 11a and, with lever 24 released, the valve 15 is in a closure condition.

The apparatus can then be placed on the back of the wearer, being supported by the shoulder straps 12, and the apparatus is ready for use.

When spraying is required the motor 14a driving the spinning disc spray, is manually actuated by a switch at the spraying apparatus 14 position, or by an electrical cable (not shown) extending between the motor 14a and a manual actuating button at the handle 21 location. With the spinning disc apparatus 14 operational, the operator grips the hand lever 21 and, by manually lifting the cable hand lever 24, the valve 15 is operated, via the cable 25, and the valve 15 is thereby open to allow liquid to flow from the reservoir 11 through the duct 13 to the spraying disc apparatus 14, from which the liquid chemical is dispersed in an annular spray pattern.

The operator can adjust the height of the spraying apparatus 14, by adjusting the vertical height of the handle part 21, and by displacing the handle part 21 from side to side the tail boom 19 can be pivoted about the horizontal pivot pin 18 to cause the spray apparatus 14 to be traversed about an arc.

The tail boom 19 will be of such length, rearwardly of the pivot pin 20, that the forwardmost part of the spray pattern generated by the spinning disc spray apparatus 14 does not reach the legs of the wearer.

It will be observed that with the horizontal pin 18, and the pivot pin 20, tail boom 19 is supported for displacement about horizontal and vertical axes and the spray apparatus 14 can be vertically and horizontally adjusted by the operator as desired.

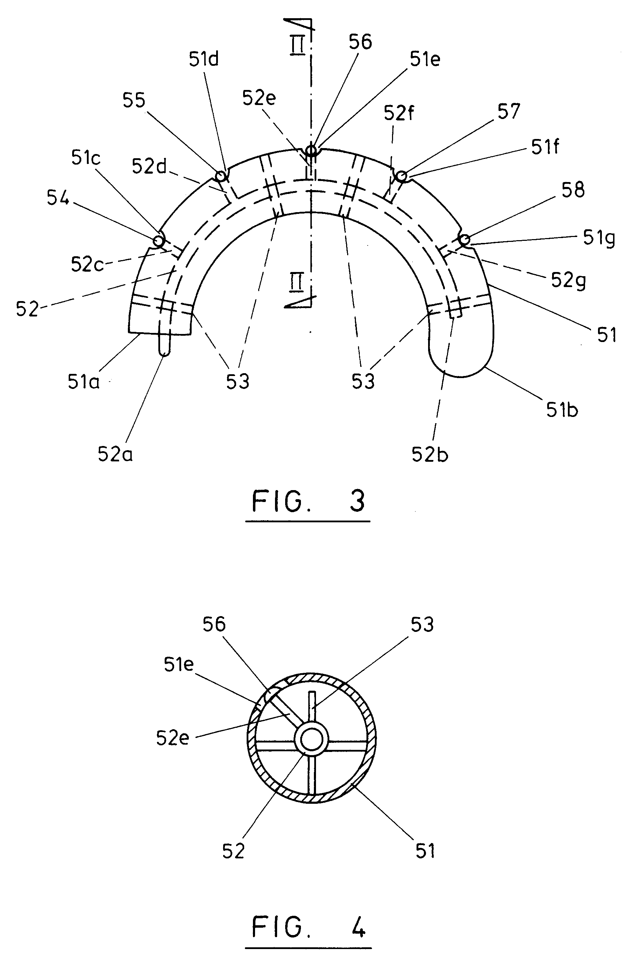

In the arrangement illustrated in Fig. 2 a back-pack 30 supports a liquid reservoir 31, a pump arrangement 32 for the liquid chemical and an air fan arrangement 33. The pump 32 and the air fan 33 may be electrically driven, conveniently by a battery (not shown) supported by the back-pack, but said pump 32 and air fan 33 are preferably mechanically driven by a small prime mover supported by the back-pack.

The pump 32 receives liquid chemical from the reservoir 31 and delivers said liquid chemical under pressure to a flexible duct 34. The air fan 33 delivers pressure air flows to a flexible duct 35, which has a diameter many times greater than the diameter of the liquid carrying duct 34. The flexible duct 34 passes through a wall of the flexible duct 35, closely adjacent to the fan 33, and the flexible duct 34 extends along the duct 35 to the free open end 35a of the duct 35 remote from the fan 33. The duct 34 terminates at an injector 36, located by a spider 37 centrally of the open free end 35a of duct 35.

A bearing pin 38 extends from the back-pack 30 and a cylindrical element 39 is rotatably supported on the pin 38. A radial extension 39a from the element 39 pivotably supports a tail boom 40, which includes an integral part 40a extending forwardly with respect to the back-pack 30 to a handle 41. The tail boom 40 extends rearwardly of the said element 39 to support, at its end remote from element 39, the free open end 35a of the duct 35.

The actuating means, for switching the fan 33 on and off, may comprise a switch 33a, mounted on the back-pack within easy reach of the operator. In like manner, the control for the pump 32 may conveniently comprise a manual switch (not shown) similar to the switch 33a, on the opposite side of the back-pack 30 within easy reach of the operator.

When the apparatus illustrated in Fig. 2 is to be prepared for use the reservoir 31 is charged with the agricultural liquid chemical to be dispensed via the conventional filler cap arrangement 31a and, when the pump 32 and fan 33 are to be electrically driven a battery is fitted to the back-pack 30. When the pump 32 and air fan 33 are to be mechanically driven by a prime mover, the fuel tank for the prime mover is charged with fuel.

Thereafter, the back-pack 30 is mounted on the back of the operator and supported thereon by shoulder straps 42, 43, and with the operator holding the handle 41 the operator can easily move to the location for spraying.

When spraying is to be initiated the operator will first manually actuate the control 33a to start the fan 33, whereby air is driven along the duct 35 and released from the open end 35a of the duct 35. With the air flow along the duct 35 initiated the operator will then manually actuate the control for the pump 32, to cause said pump to deliver liquid chemical under pressure via the duct 34 to the injector 36. With the injector 36 delivering metered liquid chemical into the air streams flowing along the air duct 35 the liquid chemical is broken down into very small droplets and said droplets are carried by the air streams out of the open end 35a of the duct 35.

With the tail boom 40 supported by the rotatable element 39 the operator can depress or raise the handle 41 to lower or raise the location of the end 35a of the duct 35 and, via the pivotable connection with the element 39a, the operator can swing the tail boom 40 from side to side by displacing the hand lever 41 from side to side.

As will be seen from Fig. 2 the open end 35a of the duct 35 is downwardly and rearwardly sloping when the tail boom 40 is substantially horizontal, and whereupon the droplets discharged into the air streams and issuing from the open ends 35a of duct 35 are carried upwardly and rearwardly with respect to the operator. Thus, in the normal position for operation, with the tail boom 40 substantially horizontal, all the liquid chemical carried by the air flows from the open end 35a of the duct 35 are directed rearwardly of a vertical plane passing through the forward-most end of the open end 35a of duct 35 and at right angles of the direction of travel of the operator, whereupon no part of the spray can contact the operator.

Fig. 3 shows a manifold arrangement which may conveniently be used with a back-pack 30, similar to the back-pack arrangement 30 illustrated in Fig. 2, and comprising a liquid reservoir 31, a pump 32, an air fan 33, and means for driving the pump 32 and air fan 33.

In the manifold arrangement illustrated in Fig. 3 an air manifold 51, of arcuate form with a substantially circular cross-section, is closed at one end 51a and has its other end 51b connected to the outlet for the air fan 33. The manifold 51 is supported in fixed location on the back-pack 30 and includes a number of outlets, in the illustrated example five outlets 51c, 51d, 51e, 51f, and 51g.

The outlet from the pump 32 is connected to one end 52a of a liquid chemical manifold 52, of arcuate form, and which is supported within the air manifold 51 by spiders 53 so that the liquid chemical manifold 52 is substantially central of each cross-section of the air manifold 51 throughout the length of the liquid manifold 52. The liquid manifold 52 terminates in a closed end 52b adjacent the inlet end 51b of the manifold 51.

A feed-pipe 52c extends from the manifold 52 to an injector 54 arranged centrally of the air outlet 51c and, in like manner, feed pipes 52d, 52e, 52f and 52g extend from manifold 52 to support injectors 55, 56, 57 and 58 respectively centrally of the outlets 51d, 51e, 51f and 51g respectively of the manifold 51.

As will be seen from Fig 4, the outlets 51c to 51g are directed rearwardly of the vertical axis passing centrally through the manifold 51 and the feed pipes 52c to 52g support the injectors 54 to 58 respectively in the centres of the outlets 51c to 51g respectively, whereupon the air streams issuing from the outlets 51c to 51g respectively carry the droplets issuing from the injectors 54 to 58 rearwardly of said vertical plane and away from the operator.

In a preferred embodiment the liquid chemical spray patterns from the individual outlets 51c to 51g may blend together, at an arcuate location spaced from the manifold 51, to produce a continuous arc of chemical droplets, particularly advantageous for the spraying of the foliage canopies of large bushes and trees as the operator passes therebeneath.

## Claims

1. Manual dispensing apparatus for dispensing liquid agricultural chemicals, comprising a backpack supporting a reservoir (11) for liquid chemical, a hand supported spray generating means (14), and means (13) for supplying liquid chemical from the reservoir to the spray generating means, characterised in that the hand supported spray generating means is arranged to spray the liquid chemical rearwardly of the operator.

2. Apparatus as claimed in claim 1, in which the spray generating means (14) is mounted on a tail boom (19) extending rearwardly with respect to the intended direction of travel of the operator.

3. Apparatus as claimed in claim 1 or claim 2, which includes a plurality of spray generating means spaced apart around an arcuate path to lie in a common plane substantially at right angles to the intended direction of travel of the operator, and arranged to discharge liquid chemical rearwardly of the said common plane.

4. Manual dispensing apparatus for dispensing liquid agricultural chemicals, comprising a backpack (30) supporting a reservoir (31) for liquid chemical, means (33) for generating air streams, and liquid spray generating means (35a) which comprises means (36) for injecting liquid chemical to be dispensed into the air streams, characterised in that the spray generating means is arranged to spray liquid chemical rearwardly of the operator.

5. Apparatus as claimed in claim 6, which includes a plurality of spray generating means (35) spaced apart around an arcuate path to lie in a common plane substantially at right angles to the intended direction of travel of the operator, and arranged to discharge liquid chemical rearwardly of the said common plane.

6. Apparatus as claimed in claim 4 or claim 5, which includes a flexible duct (34) extending from the air flow generating means (33), having its free end (35a) supported remote from the backpack (30) where the spray is generated, and means (36) for injecting liquid chemical into the air streams at or adjacent to the free end of the duct.

7. Apparatus as claimed in claim 6, in which the air duct (34) includes an arcuate section (51) fixed relative to the backpack (30), which surround the liquid chemical injection means (55 to 58).

8. Apparatus as claimed in claim 7, in which the air duct includes an air manifold (51) with a plurality of outlets (51c to g) spaced around its arcuate section, with a liquid chemical injection means (55 to 58) located adjacent each outlet.

9. Apparatus as claimed in any of claims 4 to 8, which includes a pump (32) for supplying liquid chemical under pressure for injection into the air streams.

10. Apparatus as claimed in any one of claims 4 to 9, which includes a tail boom (40) which extends rearwardly with respect to the intended direction of travel of the operator, which supports the free end (35a) of the duct (35) and from which the spray is generated.

11. Apparatus as claimed in claim 2 or claim 10, in which the spray generating means (14, 35a) is mounted such that the liquid spray pattern generated by it is always behind the operator.

12. Apparatus as claimed in any one of claims 2, 10 or 11, which includes a hand supported lever (41) linked to the tail boom (40), which extends forward of the operator and is displaceable by the operator in at least one plane to displace the spray generating means in at least one plane relative to the backpack.

13. Apparatus as claimed in claim 12, in which the lever (41) is a continuation of the tail boom (40) and the tail boom and lever are pivotally connected to the backpack for displacement about one pivotal axis.

14. Apparatus as claimed in claim 12, in which the lever is a continuation of the tail boom and the tail boom and lever are connected to the backpack by a universal joint.
